# EUROPEAN PATENT SPECIFICATION

(11) **EP 0 504 230 B1**
(45) Date of publication and mention of the grant of the patent: **08.07.1998**
(21) Application number: 91900671.8
(22) Date of filing: 07.12.1990
(51) Int. Cl.: A63B 59/12, A63B 59/14

(54) **HOCKEY STICK**
HOCKEYSCHLÄGER
CROSSE DE HOCKEY

(30) Priority: 15.12.1989 AU 7890/89; 19.03.1990 AU 9214/90; 17.08.1990 AU 1807/90
(43) Date of publication of application: 23.09.1992
(73) Proprietor: MOTLEY MANUFACTURING AGENCIES PTY LTD, Wayville, S.A. 5034 (AU)
(72) Inventor: MOTLEY, Geoffrey, Peter, Glenalta, S.A. 5052 (AU)
(74) Representative: Jennings, Nigel Robin
(86) International application number: AU9000582
(87) International publication number: WO9108803

(56) References cited:
- AU-D- 1 315 088
- AU-D- 3 413 778
- AU-D- 4 644 585
- DE-A- 2 005 952
- DE-A- 2 444 590
- FR-A- 2 487 208
- GB-A- 1 121 051
- GB-A- 1 259 467
- GB-A- 2 033 238
- GB-A- 2 139 548
- GB-A- 2 173 146
- GB-A- 2 201 117

## Description

This invention relates to both a method of manufacture of a hockey stick and to a hockey stick of different construction.

Historically, hockey sticks have been manufactured from wood by a process involving a substantial degree of hand carving. Hitherto there has not appeared to be any reasonable method of manufacture or material from which hockey sticks can have been made which would satisfy the conditions for first class play.

It has been known that there could be economic value in manufacturing a hockey stick from plastics materials where the plastics materials are injection moulded into a shape of the stick and in which the plastics material is substantially solid and can be variously chosen from one of the more common plastics such as polypropylene or nylon.

Unfortunately, such hockey sticks as have been made, have not been accepted for all classes of play for the game of hockey for technical reasons relating to difficulties pertaining to abrasion resistance, flexibility, density, strength and distribution of weight.

The problem with such previously manufactured hockey sticks from such plastics materials is that they have been inherently too heavy and there has been quite literally enormous amounts of effort and time involved in trying to find a solution which can provide for a hockey stick which not only can be manufactured reliably within a range of weights by a technique such as injection moulding but that any such product manufactured in accord with appropriate dimensions, will have the required three characteristics namely ability to resist abrasion on appropriate faces, a balance of parts that weigh appropriate amounts so that the balance of the stick once manufactured is appropriate for a player, and finally the flexibility and strength of the final product is appropriate and preferred for the application.

It has been discovered that some characteristics of the shape of the stick can be modified in order to assist in overcoming these difficulties and this has been the subject of earlier patents.

AU-B1-34137/78 discloses a hockey stick with a head, a stem end and a handle, comprising moulded plastics material, in which there is a groove extending along the rear of the stem. This construction has provided some assistance in providing better flexural characteristics with better weight distribution.

The problem with such an arrangement however is that there are no easy means by which any of a smaller number of such sticks can be balanced for individual users. Also, it has been very difficult to provide a hockey stick which will have an appropriate "feel" which is of course a combination of balance and flexural characteristics.

GB-A-2033238 discloses a hockey stick whose head portion has a depression in its impact surface. The hockey stick is moulded from foamed plastics material in such a manner that the density of the head portion is greater than that of the handle portion.

AU-B-13150188 discloses a method and apparatus for injection moulding hollow plastics items in which molten plastics material is injected through an opening into a mould space and pressurised gas is introduced into the mould space through a separate opening. The gas is wholly enclosed within the plastics material and forms a hollow core. After the plastics material has solidified, the gas pressure within the moulding is vented to atmosphere. There is no disclosure of the manufacture of hockey sticks.

The object of this invention is to provide a hockey stick made from moulded plastics material which addresses the problems discussed above and a method of making such a hockey stick.

According to the piesent invention a hockey stick of the type consisting of a head, a stem, the rear of the stem having one or more grooves formed therein, and a handle, comprising moulded plastics material is characterised in that the hockey stick comprises an outer skin region of a plastics material and a region of foamed plastics material contained by the outer skin, that the density of the head and of the stem is greater in the outer skin region than in the region contained by the outer skin and that the density of the outer skin region of the head and lower portion of the stem is greater than, and in the upper portion of the handle is less than, the average density of the outer skin.

It is preferred that the groove or grooves are of U-shaped cross-section and that their length extends parallel to the length of the stem of the hockey stick.

The groove or grooves are preferably moulded into the stem of the hockey stick at the time of moulding but they may also be incorporated later by using mechanical means, such as milling.

There are a number of ways in which the two regions of different density may be formed and these will be separately described, though the invention is not limited to any one of these examples.

In one embodiment, the hockey stick has a hollow core extending within at least part of its length. The hollow core may be contained primarily in the handle of the hockey stick and may be coaxial with the axis of the handle. The hollow core is preferably of substantially circular cross-section.

One of the significant advantages of providing a hollow core is that there is now a method and apparatus by which a hollow core can be formed in a variety of injection moulded plastics items by introducing a gaseous fluid into the mould during the moulding process. Such a method and apparatus is disclosed in AU-B-13150/88 referred to above.

It has now been appreciated that the biggest problem previously encountered in connection with hockey sticks, namely that the high density of plastics material which is necessary to provide adequate abrasion resistance can be counteracted by introducing gas into the mould during the injection moulding process so as to impart sufficient flexibility to the hockey stick whilst maintaining adequate strength.

In the further embodiment the handle of the hockey stick consists of a moulded shape interlocked, infused or surrounded by a further plastics material which provides a gripping shape by which the hockey stick can be gripped. The moulded shape may be of star cross-section, of elliptical cross-section, rectangular cross-section or of triangular cross-section or may be a slot or may comprise a plurality of apertures of circular or other shape at spaced intervals along the handle. The further plastics material is preferably foamed plastics material. The purpose of the various shapes is to provide an integral interlock with the stem and head of the hockey stick and the foamed material provides additional bulk and a shape by which the hockey stick can be gripped by a player.

In a further embodiment the hockey stick includes an outer skin of plastics material and a core comprised of a foamed plastics material. The outer skin of plastics material and the foamed plastics material may be of different chemical compositions or they may be of the same chemical compositions but of different densities.

A major problem with developing a hockey stick made from moulded plastics material is that conventional materials have characteristics which are not entirely suitable to provide appropriate flexural and fracturing characteristics of the hockey stick and it has been found that it is preferable for the plastics material or materials to be reinforced with randomly oriented fibre reinforcement, which preferably comprises glass, carbon or aramid fibres. The length of the fibre reinforcement is preferably in the range of 1 mm to 20 mm, more preferably in the range of 4 mm to 12 mm and is yet more preferably of 8 mm average length.

It is preferred that the total weight of the fibre reinforcement is in the range of 60% to 90%, preferably approximately 80%, of the total weight of the fibre reinforced plastics material.

In a preferred embodiment the density of the foamed plastics material is approximately 80% of that which would be the case if the plastics material were not foamed.

In one embodiment of the invention the handle and the stem of the hockey stick are at least partially wrapped with a material to aid the grip of a user of the hockey stick.

There are a number of techniques by which a hollow core can be formed within the hockey stick and one such method is that disclosed in AU-B-13150/88 in which plastics material is injected into a mould and a gaseous fluid is also injected into the mould under pressure during at least part of the moulding and cooling process. The injection of the gas creates an additional compressive force resulting in advantageous characteristics within the cooling plastics material so that this can be of varying density which provides a different flexural characteristic. This advantage results from the use of pressurised gas to form a hollow core within the handle and this gas not only exerts pressure on the cooling plastics material between the hollow core and the surface of the mould but also exerts a pressure in an elongate direction towards the head of the stick. This additional pressure also assists in creating the density and flexural characteristics of this portion of the stick.

Due to the overall size of a hockey stick, it would be prohibitive from a cost point of view to provide an individual die for each of a variety of different shapes and sizes of hockey stick for various types of person. However, the length and position of the hollow core within the hockey stick can be determined by the timing of the injection of the gas into the mould so that whilst the external appearance of one hockey stick may be the same as another, the length and width of their hollow cores can be quite different thereby making one hockey stick feel "heavy", and another hockey stick "light". The ability to provide a variety of weights and in fact tailor a particular hockey stick to an individual customer is therefore now possible.

Thus according to a further aspect of the present invention a method of manufacture of a hockey stick of plastics material of the type which comprises the step of injecting a plastics material into a mould is characterised in that a foaming or blowing agent is added to the plastics material prior to injecting thereof into the mould, that the plastics material is gated into the mould at a location which comprises the inner part of the hook shape at the head of the hockey stick, that a gaseous fluid is injected into the mould for a selected period whilst injecting the plastics material into the mould, thereby forming a hockey stick in which the density of the head and of the stem is greater in the outer skin region than in the region contained by the outer skin and the density of the outer skin region of the head and lower portion of the stem is greater than, and in the upper portion of the handle is less than, the average density of the outer skin, and that a groove is formed in the rear of the stem of the hockey stick during the moulding process or subsequent thereto.

Accordingly, there can be provided a plastics injection nozzle which injects plastics material directly from the outermost end of the hockey stick shape and means to introduce a gaseous fluid some 51 to 76 mm (2 to 3 inches) down the length of the stick such that during the injection process of the plastics material the injected gaseous fluid, e.g. a neutral gas such as nitrogen, will be entrained in the flowing plastics material so that as it passes the gas injection point the gas can be injected into the centre of the plastics material so that the cavity created thereby is carried along the length of the mould by the plastics material.

The plastics material may be a foamed plastics material. In practice, this will involve the inclusion within the plastics material before injection into the mould of a foaming agent which is held under a substantial pressure which is inherently decreased upon release of the plastics material into the injection mould.

It is preferred that the foamed plastics material is gated into the mould at a location which comprises the inner part of the hook shape at the head of the hockey stick. One characteristic of injecting at this location is that the area of the skin immediately surrounding and at the gate location is slightly more porous but as this is not a surface area that will be subject to abrasion this is an appropriate injection location. However, those areas of the skin which are slightly displaced from this location, that is to say the hitting surface of the head or hook and, perhaps most importantly, the underside of the head or hook, all receive the initial charge of injected foaming plastics material and a substantial thickness of material of relatively high density is thereby formed in these vital locations.

However, as the injected foamed plastics material proceeds up the die towards the handle during the injection process, the pressure of the plastics material progressively decreases due to the fact that the plastics material is moving into an open area so that the plastics material becomes progressively more porous towards the most distant parts of the dye, especially at the surface. However, this characteristic is acceptable at the handle end of the hockey stick where surface abrasion is not a problem and some surface porosity is not disadvantageous in that it provides for adhesion of a surrounding grip material.

Some of the more difficult problems relating to hockey sticks suitable for the highest International class of the sport of hockey include its stability when subjected to ultraviolet light, its resistance to changing temperature and humidity and its abrasion resistance. It is self-evident that if a hockey stick changes its flexural characteristics simply because the day is relatively warm or cold then it has less value than would otherwise be the case.

One aspect of the present invention is therefore a material which provides significant answers to these problems, namely long fibre reinforced nylon. Nylon has the significant advantage that it will absorb water and one of the main effects of this is to increase the ductility of the material which therefore effectively increases its impact strength whilst at the same time reducing flexural strength and modulus. It is therefore advantageous that a hockey stick made using such a material should be immersed in water of a temperature in the range from 0° Celsius to 100° Celsius, and preferably boiled in water, for a significant period so as to ensure a high take-up of water before commencing use.

A specific material that is of significant value to the present proposals is a long glass fibre reinforced nylon 66 which is currently offered for sale by ICI Plastics of 1 Nicholson Street, Melbourne, Victoria 3000, Australia under the trade mark "Verton".

One of the significant advantages of using such a material relates to the mode of any fracture that might be caused so that if in fact the stick breaks under fracture loadings, it can be expected that any fracture edges will not be spear-like as might be the case with continuous rovings so that such hockey sticks can be considered safer than previous hockey sticks.

For a better understanding of this invention it will now be described with reference to the preferred embodiments it being emphasised that it is not intended that the invention should be necessarily limited to the specific article being described.

In the description reference shall be made to the accompanying drawings wherein:
Figure 1 is a side view of a known hockey stick;
Figure 2 shows one embodiment of a handle for a hockey stick in accordance with the invention;
Figure 3 shows a second embodiment of such a handle;
Figure 4 is a cross-sectional view of the stem of a hockey stick in accordance with the invention showing in particular a groove in the rear of the stem;
Figure 5 is a cross-sectional view of a hockey stick manufactured in accordance with the invention;
Figure 6 is a cross-sectional view along the line 6-6 in Figure 5; and
Figure 7 is a cross-sectional view along the line 7-7 in Figure 5.

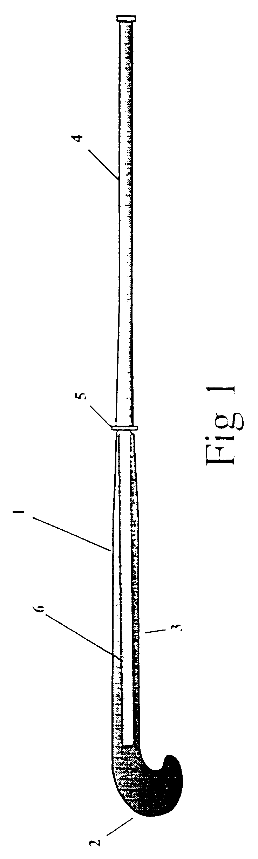

Referring to Figure 1, the hockey stick 1 is comprised of a head 2, a stem 3, a handle 4 and a bead 5 showing a division between the parts 3 and 4. The stem 3 includes a slot 6 substantially between the bead 5 and the head 2.

The factors that have to be considered in connection with the invention in relation to the overall design comprise the outside diameter of the handle, the ability to core the handle using either gaseous injection or foaming materials, a change in the groove in the back of the stem part of the stick and a change in the overall head mass to reduce weight.

The solid hockey stick shown in Figure 1 was moulded using the referred to Verton material produced by ICI and being type RF700-10EM, this being a 50 percent long glass reinforced nylon 66 material.

Such a material has a specific gravity of 1.57. The length moulded was 940 mm, the volume was 546,103 cubic mm, the weight was 856 grams (30.2 ozs), maximum stress under an arbitrary 200 Newton force applied at 860 mm from a rigidly fixed handle end comprised 127.3 Mpa and a maximum deflection of 11.4 mm.

At a total weight of 856 g (30.2 ozs), this hockey stick, while useful for some players, was not satisfactory for normal play by competition players recognising that a weight of something between 483 to 767 g (17 to 27 ozs) was necessary.

### Handle Analysis - Cored Handle

The handle of most hockey sticks is the area of least stress in a normal game of hockey. As in the game of golf, the head of the stick does most of the work and is subject to the majority of abuse in a normal game. Players of hockey generally wrap towel binding around the outer handle of the stick to provide adequate grip and "feel". Provided the outer diameter of the handle remains inside a 50 mm diameter ring gauge there are no specific size requirements. As a result of this we have examined ways to core out the handle area to reduce weight and to shift the centre of gravity towards the striking area of the stick.

The standard handle diameter is 20 mm and covers a distance of 360 mm on a 940 mm (37") stick We cored the handle using a gas injection system marketed at the time in Australia by ICI (Embodiment 1). This system identified by the Registered Trade Mark, "Cinpres" allows solid regions to be cored using a gas which is injected at the same time as the thermoplastic resin. The analysis looked at the effect of introducing a hole over a distance of 460 mm into the handle region of the stick. Various diameter holes were examined as well as slightly increasing the outer diameter of the handle to 21 mm to see the effect on the strength and deflection of the handle area (Embodiment 2). The results for embodiments 1 and 2 are shown in Tables 1 and 2 respectively. In each case the stress and deflection are measured under a 200 Newton Force applied at 860 mm from a rigidly fixed handle end.

**Table 1**

| Embodiment 1 | | | | | | | | |
|---|---|---|---|---|---|---|---|---|
| Handle Dia (mm) | Hole Dia (mm) | Weight Red'n | | Total Wt. | | Wall Thick. (mm) | Stress (MPa) | Defl'n (mm) |
| | | grams | (ozs) | grams | (ozs) | | | |
| 20 | 0 | 0 | 0 | 856 | (30.2) | 10 | 127.3 | 11.4 |
| 20 | 5 | 14 | (0.5) | 843 | (29.7) | 7.5 | 127.8 | 11.4 |
| 20 | 8 | 37 | (1.3) | 824 | (29.0) | 6 | 130.7 | 11.7 |
| 20 | 10 | 57 | (2.0) | 801 | (28.2) | 5 | 135.8 | 12.1 |
| 20 | 12 | 82 | (2.9) | 778 | (27.4) | 4 | 146.3 | 13.1 |
| 20 | 14 | 111 | (3.9) | 747 | (26.3) | 3 | 167.6 | 15.0 |
| 20 | 15 | 128 | (4.5) | 730 | (25.7) | 2.5 | 186.3 | 16.6 |
| 20 | 16 | 145 | (5.1) | 713 | (25.1) | 2 | 215.7 | 19.3 |

**Table 2**

| Embodiment 2 | | | | | | | | |
|---|---|---|---|---|---|---|---|---|
| Handle Dia (mm) | Hole Dia (mm) | Weight Red'n | | Total Wt. | | Wall Thick (mm) | Stress (MPa) | Defl'n (mm) |
| | | grams | (ozs) | grams | (ozs) | | | |
| 21 | 0 | -23 | (-0.8) | 883 | (31.1) | 10.5 | 104.7 | 9.4 |
| 21 | 5 | -8.5 | (-0.3) | 585 | (20.6) | 8 | 105.1 | 9.4 |
| 21 | 8 | 14 | (0.5) | 846 | (29.8) | 6.5 | 107.0 | 9.6 |
| 21 | 10 | 34 | (1.2) | 826 | (29.1) | 5.5 | 110.4 | 9.9 |
| 21 | 12 | 60 | (2.1) | 801 | (28.2) | 4.5 | 117.3 | 10.5 |
| 21 | 14 | 88 | (3.1) | 770 | (27.1) | 3.5 | 130.5 | 11.7 |
| 21 | 15 | 105 | (3.7) | 755 | (26.6) | 3 | 141.6 | 12.6 |
| 21 | 16 | 122 | (4.3) | 736 | (25.9) | 2.5 | 158.0 | 14.1 |

### Handle Analysis - Laminated Handle

Embodiments 3 and 4 involved examining the use of two polymeric materials in the handle area. The intention was to mould a slot in the handle made from material identified by the Registered Trade Mark "Verton", and as a second operation, insert mould a low density foamed polymeric material into the slot area. This would have two effects:
a) Lower the weight of the handle area
b) Act as a shock absorbing medium to reduce jarring.

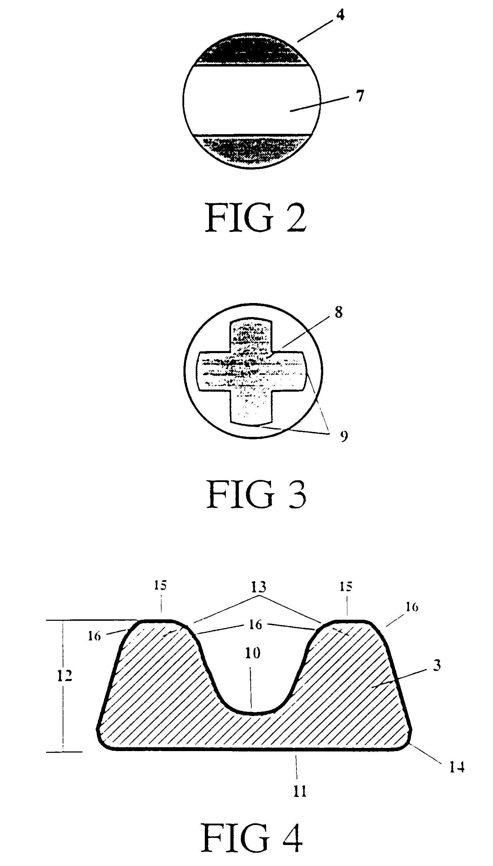

With reference to Figure 2, Embodiment 3 consisted of a 20 mm handle 4 with a 10 mm slot 7 and Embodiment 4 consisted of a 21 mm handle 4 with an 11 mm slot 7.

Table 3 shows the results of the modifications.

**Table 3**

| **Embodiments 3 and 4** | | | | | | | |
|---|---|---|---|---|---|---|---|
| Handle Dia (mm) | Slot Width (mm) | Weight Red'n | | Total Wt. | | Stress (MPa) | Defl'n (mm) |
| | | grams | (ozs) | grams | (ozs) | | |
| 20 | 10.0 | 94 | (3.3)* | 764 | (26.9) | 158.5 | 14.1 |
| 21 | 11.0 | 99 | (3.5)* | 778 | (27.4) | 132.7 | 11.3 |

| | | | | | | | |
|---|---|---|---|---|---|---|---|
| * Note! Includes the addition of a foamed polymeric material with a density of 375 kg/m³. | | | | | | | |

### Handle Analysis - Cross Formation Composite

Embodiments 5 to 7 followed a similar theme to Embodiment 3 in that two materials were considered, one being a material identified by the Registered Trade Mark "Verton" and the other being a low density foamed polymeric material. We used a cross formation centred in the handle region. Foamed polymeric material was moulded over, to interlock with, the cross to provide a soft feel handle which acted to reduce jarring in play. The soft material would completely cover the Verton and could be coloured to provide an aesthetic handle.

With reference to Figure 3, which shows a cross-sectional view of the handle 4, Embodiment 5 consists of a cross 8 in which both arms 9 have a width of 6.0 mm. Embodiment 6 is similar to Embodiment 4 but the arms 9 are both 4.0 mm in width. Embodiment 7 has one arm 9 of 6.0 mm and one arm 9 of 4.0 mm. In all three embodiments the handle diameter is 20 mm and the cross diameter is 16 mm.

Table 4 shows the results of the three Embodiments.

**Table 4**

| **Embodiments 5, 6 and 7** | | | | | | | |
|---|---|---|---|---|---|---|---|
| Handle Dia (mm) | Embodiment | Weight Red'n | | Total Wt. | | Stress (MPa) | Defl'n (mm) |
| | | grams | (ozs) | grams | (ozs) | | |
| 20 | 5 | 69 | (2.43)* | 789 | (27.77) | 385.9 | 43.1 |
| 20 | 6 | 89.7 | (3.16)* | 768 | (27.04) | 577.9 | 64.5 |
| 20 | 7 | 77.8 | (2.74)* | 780 | (27.46) | 408.7 | 45.6 |

| | | | | | | | |
|---|---|---|---|---|---|---|---|
| * Note! Includes the addition of a foamed polymeric material with a density of 375 kg/m³. | | | | | | | |

### Analysis of Groove on Back of Hockey Stick

In this section we are examining the weight reduction and effect on strength as a result of modifying the groove section down the back of the hockey stick. Each change is treated separately to see the effect on deflection and stress as a result of the change. Embodiment 8 represents the base embodiment to which comparisons are made.

Referring to the Figure 4, which is a representation of Embodiment 8, the stem 3 is 45 mm wide across the front face 11 and is 20 mm thick from front face 11 to back 12, the groove 10 has a radius of 7.5 mm. The ridges 13 either side of the groove 10 have a flat top 15 with curved edges 16 of radius of 5.0 mm. The curves 14 at either side of the front face have a radius of curvature of 3.0 mm. The cross-sectional area is 670.565 mm².

The option being examined are as follows:
- Embodiment 9: Remove 1 mm from the front face 11 thereby making the thickness of the stick 19 mm
- Embodiment 10: Move the centre of curvature of the groove 10 towards the front face 11 by 0.5 mm
- Embodiment 11: Increase the radius of the groove 10 to 8.0 mm and reduce the radius of the ridges 13 to 4.5 mm
- Embodiment 12: As in Embodiment 11 but change the radius of the ridge 13 to 6.0 mm
- Embodiment 13: As in Embodiment 12 but change the radius of the ridge 13 to 5.0 mm.

Table 5 shows the results of the proposed changes.

**Table 5**

| Embodiment | Area (mm²) | Weight Red'n | | Total Wt | | Stress (MPa) | Defl'n (mm-4) |
|---|---|---|---|---|---|---|---|
| | | grams | (ozs) | grams | (ozs) | | |
| 8 | 670.565 | 0 | (0) | 856 | (30.2) | 59.8 | 4.6 |
| 9 | 628.226 | 20 | (0.7) | 835 | (29.5) | 66.9 | 5.4 |
| 10 | 654.077 | 8.5 | (0.3) | 849 | (30.0) | 60.4 | 4.6 |
| 11 | 632.162 | 17 | (0.6) | 838 | (29.6) | 63.0 | 4.8 |
| 12 | 626.215 | 20 | (0.7) | 835 | (29.5) | 66.8 | 5.0 |
| 13 | 598.559 | 34 | (1.2) | 821 | (29.0) | 73.0 | 5.4 |

### Analysis of the Head Area of the Hockey Stick

The head, or contact area of the stick, is the most important part in normal play. The size of this region is kept as large as permitted by the regulations of the game. The proposed design has a bulbous head shape which concentrates weight and the centre of gravity of the stick towards the contact area.

To further reduce weight of the stick it is proposed to remove 1 mm from the thickness of the head region. This alteration will have no effect upon the stress or deflection of the stick, but will serve to further reduce the overall weight. There is little effect upon the playing characteristics of the stick as the design has seen the movement of the centre of gravity towards the striking face.

The net effect of the reduction of 1 mm in the thickness of the blade is a reduction of weight of 11.3 g (0.4 ozs). On its own this would reduce the weight of the standard stick from 856 g (30.2 ozs) to 845 g (29.8 ozs).

The previously explored Embodiments illustrate the variety of ways in which different techniques can be used in order to achieve the techniques of this invention.

By combining some of the features of each of the Embodiments, it has been found that a hockey stick having adequate abrasion resistance, effective characteristics and weight distribution can be achieved which can be in the vicinity of 708 g (25 ozs) all up weight.

What has not been described specifically is the additional feature of providing what is generally called structural foam and by providing for a structural foam which is introduced into the core of the remaining part of the hockey stick, an even more significant weight saving can be achieved.

Further, while reference has been made to a 50 percent long strand glass fibre reinforced nylon 66 material, it is to be clear that there are a number of alternative materials and compositions of material that can be used which can be useful in this application.

Typically then, we have found that it is still useful and provides significant advantages to use 35 percent long glass reinforced Nylon 66 and 40 percent long glass reinforced polypropylene.

The extent to which these materials are either individually used or used in combination is a matter of judgement in relation to the ideal conditions for a hockey stick for each individual choice but illustrate the variations that are presently possible.

In moulding trials carried out using structural foam and using the so called Verton material, it has been found that there can be provided an approximate 2.5 to 3.0 mm wall of solid Verton type material on the outside of the hockey stick with a more porous or foamed region of material inside the skin and of course in preference a further cored out section within the handle region.

On testing thus far, the maximum stress value with a typical article in which them is a 200 Newton force applied at a 500 mm distance from a rigid support holding the stem, will be approximately 150 Mpa.

A further preferred embodiment will now be described which incorporates a number of the findings described above.

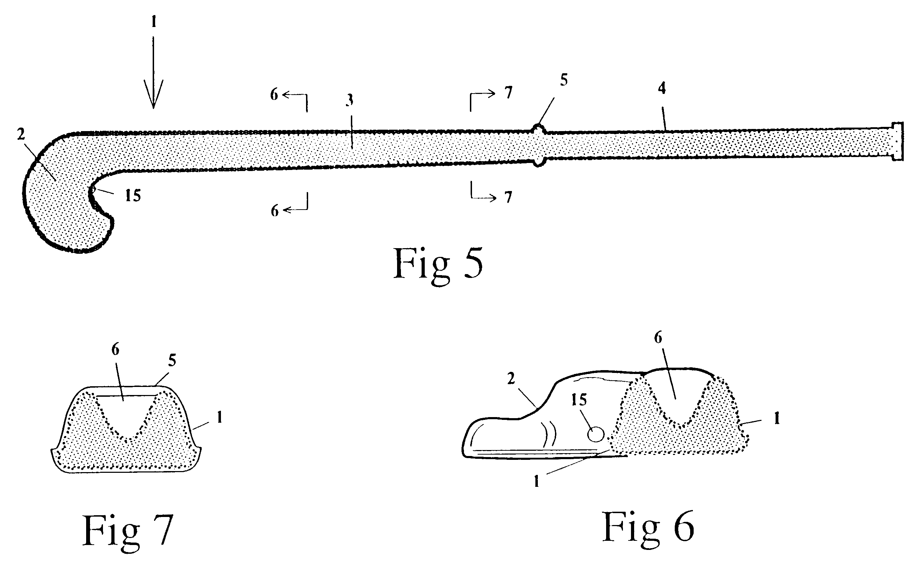

Referring to the Figures 5, 6 and 7, the hockey stick 1 is comprised of, in conventional manner, a head 2 with a gate location at an inner step part 15.

A handle 4 and a stem 3 are separated by a bead 5.

The shape of the hockey stick at the stem 3, as shown by the cross-section 6-6 and 7-7 in Figures 6 and 7 respectively, includes a slot 6 along the lower part at a back side which extends substantially the length of the stem between the bead 5 and the hook or head 2 to provide additional depth but in accord with a principle the subject of a previous patent.

In the manufacturing process which comprises injecting in an injection moulding process a thermoplastics material, the plastics material is comprised of a plastics material available from the company ICI and similar to that which is sold under the trade mark "Verton (RF-700-10 EM)" with however a reduced long fibreglass content so that the fibreglass total comprises 35% by weight of the total weight of the material. The plastics material is comprised of nylon 66.

The foaming or blowing agent which is used is known as "Hydrocerol" and the quantity of this material is such that the weight of the plastics is reduced subsequent to foaming within the mould to approximately 80% of the total weight.

This of course is varied in accord with the total weight of a stick required and the balance and as with the length of fibre and the very specific characteristics of the plastics material these can be varied within carefully controlled limits.

The length of the reinforcing fibre is 8 mm and as a part of the injection process, this is injected through a reasonably large gate so that the reinforcing fibre is kept more or less intact so that whereas it is randomly distributed, it is relatively long as compared to other processes and mixtures that may be used.

By directing the injecting material at the location which comprises the inner part of the hook at 15, it is found somewhat conveniently that this provides for a very substantial and consolidated skin wound those areas in the immediate vicinity of the hook and that as the distance from the injection gate is extended, the skin becomes more porous to the extent that the handle area 4 has some visible porosity on the external surface so that perhaps a 60 or 70% of plastics material and reinforcement is the consolidation of the external surface at this area.

In the injection process, the plastics material is first prepared and the blowing agent Hydrocerol is mixed and held in a holding container under pressure so that whereas the blowing agent has effected a release of gas pressure, this has not caused any substantial foaming because of the maintenance of the pressure.

By injecting then this results in a release of such pressure insofar that there is an air outlet at some parts of the stick mould and the result of the injection process is in accord with the description.

The results of the technique are such that for the first time there has been able to be made by the process of injection moulding a hockey stick which provides for an extremely strong surface skin which substantially resists abrasion and therefore provides long life for a purchaser but perhaps even more importantly, the all up weight of a hockey stick which still is within reasonable dimensions of size can be manufactured to be within the range required by international hockey players and in accord with appropriate international rules.

It has been found by slight variations of the amount of blowing agent, that the all up weight of a stick can be varied so that selected weights such as a 596 g (21 ounce) or a 625 g (22 ounce) or even perhaps a 138 g (26 ounce) stick can be made but in every case, having very adequate balance between the various parts of the stick in weight and finally being sufficiently strong so that they will not readily fracture if subjected to impact at various parts against other sticks or the ground or other obstacles.

In the instance described, the total amount of plastics material has been reduced by approximately 20% by weight by reason of the gaseous infusion and the skin at the lower end (that is around the hook) is approximately 2 mm thick and substantially consolidated part whereas at the handle the skin is still approximately 2 mm thick but this has been reduced from a solid compacted material to one in which there is a substantial infusion of approximately 5 to 10% of gaseous infusion.

The quantity of blowing agent in the plastics material can be varied and the range of perhaps 0.121% of blowing agent is possible although 0.25% by weight of the blowing agent is a preferred quantity.

## Claims

1. A hockey stick (1) consisting of a head (2), a stem (3) the rear of the stem (3) having one or more grooves formed therein (10; 6), and a handle (4), comprising moulded plastics material, characterised in that the hockey stick comprises an outer skin region of a plastics material and a region of foamed plastics material contained by the outer skin, that the density of the head (2) and of the stem (3) is greater in the outer skin region than in the region contained by the outer skin and that the density of the outer skin region of the head (2) and lower portion of the stem (3) is greater than, and in the upper portion of the handle is less than, the average density of the outer skin.

2. A hockey stick as claimed in Claim 1, characterised in that the groove or grooves (10; 6) are of 'U' shaped cross-section and their length extends parallel to the length of the stem (3) of the hockey stick.

3. A hockey stick as claimed in Claim 1, characterised in that the groove or grooves (10; 6) are moulded in the stem (3) of the hockey stick.

4. A hockey stick as claimed in any one of Claims 1 to 3, characterised by a hollow core extending within at least part of its length.

5. A hockey stick as claimed in Claim 4, characterised in that the hollow core is contained primarily in the handle (4) of the hockey stick and is coaxial with the axis of the handle (4).

6. A hockey stick as claimed in Claim 5, characterised in that the hollow core is of substantially circular cross-section.

7. A hockey stick as claimed in any one of Claims 1 to 3, characterised in that the handle (4) of the hockey stick consists of a moulded shape (7, 8) interlocked, infused or surrounded by a further plastics material which provides a gripping shape by which the hockey stick can be gripped.

8. A hockey stick as claimed in Claim 7, characterised in that the moulded shape is of star cross-section (8), of elliptical cross-section, rectangular cross-section or of triangular cross-section or is a slot (7) or comprises a plurality of circular apertures at spaced intervals along the handle (4).

9. A hockey stick as claimed in any one of the preceding claims, characterised in that the outer skin of plastics material and the foamed plastics material are of different chemical composition.

10. A hockey stick as claimed in any one of Claims 1 to 8, characterised in that the outer skin of plastics material and the foamed plastics material are of the same chemical composition but are of different densities.

11. A hockey stick as claimed in any one of the preceding claims characterised in that the plastics material(s) is/are of thermoplastic type.

12. A hockey stick as claimed in Claim 11, characterised in that the plastics material(s) is/are nylon or polypropylene.

13. A hockey stick as claimed in any one of the preceding claims characterised in that the plastics material(s) is/are reinforced with randomly oriented fibre reinforcement.

14. A hockey stick as claimed in Claim 13, characterised in that the reinforcement comprises glass, carbon or aramid fibres.

15. A hockey stick as claimed in Claim 13 or 14, characterised in that the length of the fibre reinforcement lies in the range of 1 mm to 20 mm.

16. A hockey stick as claimed in Claim 15, characterised in that the length of the fibre reinforcement lies in the range of 4 mm to 12 mm.

17. A hockey stick as claimed in Claim 16, characterised in that the fibre reinforcement has an average length of 8 mm.

18. A hockey stick as claimed in any one of Claims 13 to 17, characterised in that the total weight of the fibre reinforcement lies in the range of 60% to 90% of the total weight of the fibre reinforced plastics material.

19. A hockey stick as claimed in Claim 18, characterised in that the total weight of the fibre reinforcement is approximately 80% of the total weight of the fibre reinforced plastics material.

20. A hockey stick as claimed in any one of the preceding claims, characterised in that the density of the foamed plastics material is approximately 80% of that which would be the case if the plastics material were not foamed.

21. A hockey stick as claimed in any one of the preceding claims, characterised in that the handle (4) and the stem (3) are at least partially wrapped with a material to aid the grip of a user of the hockey stick.

22. A method of manufacture of a hockey stick of plastics material which comprises injecting a plastics material into a mould, characterised in that a foaming or blowing agent is added to the plastics material prior to injecting thereof into the mould, that the plastics material is gated into the mould at a location which comprises the inner part of the hook shape at the head (2) of the hockey stick, that a gaseous fluid is injected into the mould for a selected period whilst injecting the plastics material into the mould, thereby forming a hockey stick in which the density of the head (2) and of the stem (3) is greater in the outer skin region than in the region contained by the outer skin and the density of the outer skin region of the head (2) and lower portion of the stem (3) is greater than, and in the upper portion of the handle is less than, the average density of the outer skin, and that a groove (10; 6) is formed in the rear of the stem (3) of the hockey stick during the moulding process or subsequent thereto.

23. A method as claimed in Claim 22, characterised in that the plastics material is of thermoplastic type.

24. A method as claimed in Claim 23, characterised in that the plastics material is nylon or propylene.

25. A method as claimed in any one of Claims 22 to 24, characterised in that after manufacture the hockey stick is immersed in water of a temperature in the range from 0° Celsius to 100° Celsius.

## Patentansprüche

1. Hockeyschläger (1), bestehend aus einem Kopf (2), einem Stiel (3), wobei die Rückseite des Stiels (3) eine oder mehrere darin ausgebildete Rillen (10; 6) aufweist, und einem Griff (4), der geformten Kunststoff umfaßt, dadurch gekennzeichnet, daß der Hockeyschläger einen Außenhautbereich aus Kunststoff und einen in der Außenhaut enthaltenen Bereich aus aufgeschäumtem Kunststoff umfaßt, daß die Dichte des Kopfes (2) und des Stiels (3) im Außenhautbereich größer ist als in dem in der Außenhaut enthaltenen Bereich und daß die Dichte des Außenhautbereichs des Kopfes (2) und des unteren Abschnitts des Stiels (3) größer und im oberen Griffabschnitt geringer ist als die durchschnittliche Dichte der Außenhaut.

2. Hockeyschläger nach Anspruch 1, dadurch gekennzeichnet, daß die Rille oder Rillen (10; 6) U-förmigen Querschnitt aufweisen und sich ihre Länge parallel zur Länge des Stiels (3) des Hockeyschlägers erstreckt.

3. Hockeyschläger nach Anspruch 1, dadurch gekennzeichnet, daß die Rille oder Rillen (10; 6) in den Stiel (3) des Hockeyschlägers geformt sind.

4. Hockeyschläger nach einem der Ansprüche 1 bis 3, gekennzeichnet durch einen hohlen Kern, der sich über wenigstens einen Teil seiner Länge erstreckt.

5. Hockeyschläger nach Anspruch 4, dadurch gekennzeichnet, daß der hohle Kern in erster Linie in dem Griff (4) des Hockeyschlägers enthalten ist und mit der Achse des Griffs (4) koaxial ist.

6. Hockeyschläger nach Anspruch 5, dadurch gekennzeichnet, daß der hohle Kern im wesentlichen kreisförmigen Querschnitt aufweist.

7. Hockeyschläger nach einem der Ansprüche 1 bis 3, dadurch gekennzeichnet, daß der Griff (4) des Hockeyschlägers ein mittels einer Form gebildetes Formstück (7, 8) aufweist, in das ein weiterer Kunststoff eingreift bzw. das von einem weiteren Kunststoff durchdrungen oder umgeben wird, der ein Grifformstück vorsieht, durch das der Hockeyschläger ergriffen werden kann.

8. Hockeyschläger nach Anspruch 7, dadurch gekennzeichnet, daß das mittels einer Form gebildete Formstück sternförmigen Querschnitt (8), elliptischen Querschnitt, rechteckigen Querschnitt oder dreieckigen Querschnitt aufweist, oder ein Schlitz (7) ist, oder eine Mehrzahl von kreisförmigen Öffnungen umfaßt, die längs des Griffes (4) in Abständen angeordnet sind.

9. Hockeyschläger nach einem der vorhergehenden Ansprüche, dadurch gekennzeichnet, daß die Außenhaut aus Kunststoff und der aufgeschäumte Kunststoff unterschiedliche chemische Zusammensetzungen aufweisen.

10. Hockeyschläger nach einem der Ansprüche 1 bis 8, dadurch gekennzeichnet, daß die Außenhaut aus Kunststoff und der aufgeschäumte Kunststoff gleiche chemische Zusammensetzungen, jedoch unterschiedliche Dichte aufweisen.

11. Hockeyschläger nach einem der vorhergehenden Ansprüche, dadurch gekennzeichnet, daß der/die Kunststoff(e) thermoplastische Kunststoffe ist/sind.

12. Hockeyschläger nach Anspruch 11, dadurch gekennzeichnet, daß der/die Kunststoff(e) Nylon oder Polypropylen ist/sind.

13. Hockeyschläger nach einem der vorhergehenden Ansprüche, dadurch gekennzeichnet, daß der/die Kunststoff(e) mit regellos ausgerichteten Fasern verstärkt ist/sind.

14. Hockeyschläger nach Anspruch 13, dadurch gekennzeichnet, daß die Verstärkung Glas-, Kohlenstoff- oder Aramidfasern umfaßt.

15. Hockeyschläger nach Anspruch 13 oder 14, dadurch gekennzeichnet, daß die Länge der Faserverstärkung im Bereich von 1 mm bis 20 mm liegt.

16. Hockeyschläger nach Anspruch 15, dadurch gekennzeichnet, daß die Länge der Faserverstärkung im Bereich von 4 mm bis 12 mm liegt.

17. Hockeyschläger nach Anspruch 16, dadurch gekennzeichnet, daß die Faserverstärkung eine durchschnittliche Länge von 8 mm aufweist.

18. Hockeyschläger nach einem der Ansprüche 13 bis 17, dadurch gekennzeichnet, daß das Gesamtgewicht der Faserverstärkung im Bereich von 60% bis 90% des Gesamtgewichts des faserverstärkten Kunststoffs liegt.

19. Hockeyschläger nach Anspruch 18, dadurch gekennzeichnet, daß das Gesamtgewicht der Faserverstärkung etwa 80% des Gesamtgewichts des faserverstärkten Kunststoffs ausmacht.

20. Hockeyschläger nach einem der vorhergehenden Ansprüche, dadurch gekennzeichnet, daß die Dichte des aufgeschäumten Kunststoffs etwa 80% der Dichte entspricht, die der Fall sein würde, wenn der Kunststoff nicht aufgeschäumt wäre.

21. Hockeyschläger nach einem der vorhergehenden Ansprüche, dadurch gekennzeichnet, daß der Griff (4) und der Stiel (3) wenigstens teilweise mit einem Material umhüllt sind, das den Griff eines Benutzers des Hockeyschlägers verbessert.

22. Verfahren zur Herstellung eines Hockeyschlägers aus Kunststoff, das das Einspritzen eines Kunststoffs in eine Form umfaßt, dadurch gekennzeichnet, daß dem Kunststoff vor seinem Einspritzen in die Form ein Treibmittel zugesetzt wird, daß der Kunststoff an einer Stelle in die Form eingebracht wird, die den inneren Teil der Hakenform am Kopf (2) des Hockeyschlägers umfaßt, daß für eine gewählte Zeitdauer ein gasförmiges Fluid in die Form gespritzt wird, während der Kunststoff in die Form gespritzt wird, wodurch ein Hockeyschläger gebildet wird, bei dem die Dichte des Kopfes (2) und des Stiels (3) im Außenhautbereich größer ist als in dem in der Außenhaut enthaltenen Bereich und die Dichte des Außenhautbereichs des Kopfes (2) und des unteren Abschnitts des Stiels (3) größer und im oberen Griffabschnitt geringer ist als die durchschnittliche Dichte der Außenhaut, und daß während des Formprozesses oder im Anschluß daran eine Rille (10; 6) in die Rückseite des Stiels (3) des Hockeyschlägers geformt wird.

23. Verfahren nach Anspruch 22, dadurch gekennzeichnet, daß der Kunststoff thermoplastisch ist.

24. Verfahren nach Anspruch 23, dadurch gekennzeichnet, daß der Kunststoff Nylon oder Propylen ist.

25. Verfahren nach einem der Ansprüche 22 bis 24, dadurch gekennzeichnet, daß der Hockeyschläger nach der Herstellung in Wasser mit einer Temperatur im Bereich von 0° Celsius bis 100° Celsius getaucht wird.

## Revendications

1. Crosse de hockey (1) constituée d'une tête (2), d'une queue (3) dont l'arrière présente une ou plusieurs rainures (10; 6) et d'une poignée (4), comprenant un matériau de matière plastique moulée, caractérisée en ce que la crosse de hockey comprend une région de peau externe formée d'une matière plastique et une région de matière plastique expansée contenue par la peau externe, en ce que la densité de la tête (2) et de la queue (3) est supérieure dans la région de peau externe à celle de la région contenue par la peau externe et en ce que la densité de la région de peau externe de la tête (2) et de la partie inférieure de la queue (3) est supérieure, et dans la partie supérieure de la poignée, est inférieure à la densité moyenne de la peau externe.

2. Crosse de hockey selon la revendication 1, caractérisée en ce que la ou les rainures (10; 6) a (ont) une section transversale en forme de U et sa (leur) longueur s'étend parallèlement à la longueur de la queue (3) de la crosse de hockey.

3. Crosse de hockey selon la revendication 1, caractérisée en ce que la ou les rainures (10; 6) est (sont) moulée(s) dans la queue (3) de la crosse de hockey.

4. Crosse de hockey selon l'une quelconque des revendications 1 à 3, caractérisée par une âme creuse s'étendant à l'intérieur d'au moins une partie de sa longueur.

5. Crosse de hockey selon la revendication 4, caractérisée en ce que l'âme creuse est contenue principalement dans la poignée (4) de la crosse de hockey et est coaxiale avec l'axe de la poignée (4).

6. Crosse de hockey selon la revendication 5, caractérisée en ce que l'âme creuse a une section transversale sensiblement circulaire.

7. Crosse de hockey selon l'une quelconque des revendications 1 à 3, caractérisée en ce que la poignée (4) de la crosse de hockey a une forme moulée (7, 8) accouplée, noyée ou entourée par une autre matière plastique qui constitue une forme de prise permettant de saisir la crosse de hockey.

8. Crosse de hockey selon la revendication 7, caractérisée en ce que la forme moulée a une section transversale en étoile (8), elliptique, rectangulaire ou triangulaire ou forme une gorge (7) ou comprend une série d'ouvertures circulaires situées à intervalles espacés le long de la poignée (4).

9. Crosse de hockey selon l'une quelconque des revendications précédentes, caractérisée en ce que la peau externe de matière plastique et la matière plastique expansée ont une composition chimique différente.

10. Crosse de hockey selon l'une quelconque des revendications 1 à 8, caractérisée en ce que la peau externe de matière plastique et la matière plastique expansée ont la même composition chimique, mais des densités différentes.

11. Crosse de hockey selon l'une quelconque des revendications précédentes, caractérisée en ce que la ou les matières plastiques est (sont) de type thermoplastique.

12. Crosse de hockey selon la revendication 11, caractérisée en ce que la ou les matières plastiques est (sont) constituée(s) de Nylon ou de polypropylène.

13. Crosse de hockey selon l'une quelconque des revendications précédentes, caractérisée en ce que la ou les matières plastiques est (sont) renforcée(s) de fibres de renfort à distribution statistique.

14. Crosse de hockey selon la revendication 13, caractérisée en ce que le renfort comprend des fibres de verre, de carbone ou d'aramide.

15. Crosse de hockey selon la revendication 13 ou 14, caractérisée en ce que la longueur des fibres de renfort se situe dans la plage de 1 à 20 mm.

16. Crosse de hockey selon la revendication 15, caractérisée en ce que la longueur des fibres de renfort se situe dans la plage de 4 à 12 mm.

17. Crosse de hockey selon la revendication 16, caractérisée en ce que les fibres de renfort ont une longeur moyenne de 8 mm.

18. Crosse de hockey selon l'une quelconque des revendications 13 à 17, caractérisée en ce que le poids total des fibres de renfort se situe dans une plage de 60 à 90% du poids total de la matière plastique renforcée par les fibres.

19. Crosse de hockey selon la revendication 18, caractérisée en ce que le poids total des fibres de renfort est d'environ 80% du poids total de la matière plastique renforcée par les fibres.

20. Crosse de hockey selon l'une quelconque des revendications précédentes, caratérisée en ce que la densité de la matière plastique expansée est d'environ 80% de celle qu'aurait la matière plastique non expansée.

21. Crosse de hockey selon l'une quelconque des revendications précédentes, caractérisée en ce que la poignée (4) et la queue (3) sont au moins partiellement enveloppées d'un matériau pour faciliter la prise de la crosse de hockey par un utilisateur.

22. Procédé de fabrication d'une crosse de hockey de matière plastique qui comprend l'injection d'une matière plastique dans un moule, caractérisé en ce qu'un agent d'expansion ou de soufflage est ajouté à la matière plastique avant son injection dans le moule, en ce que la matière plastique est introduite dans le moule à un emplacement qui comprend la partie interne de la forme en crochet au niveau de la tête (2) de la crosse de hockey, en ce qu'un fluide gazeux est injecté dans le moule pendant une période sélectionnée tout en injectant la matière plastique dans le moule, formant de la sorte une crosse de hockey dans laquelle la densité de la tête (2) et de la queue (3) est supérieure dans la région de peau externe à celle de la région contenue par la peau externe, et la densité de la région de peau externe de la tête (2) et de la partie inférieure de la queue (3) est supérieure et, dans la partie supérieure de la poignée, inférieure à la densité moyenne de la peau externe, et en ce qu'une rainure (10; 6) est formée dans l'arrière de la queue (3) de la crosse de hockey au cours du procédé de moulage ou après celui-ci.

23. Procédé selon la revendication 22, caractérisé en ce que la matière plastique est de type thermoplastique.

24. Procédé selon la revendication 23, caractérisé en ce que la matière plastique est du Nylon ou du propylène.

25. Procédé selon l'une quelconque des revendications 22 à 24, caractérisé en ce que, après fabrication, la crosse de hockey est immergée dans de l'eau d'une température dans la plage de 0 à 100°C.
